# EUROPEAN PATENT SPECIFICATION

(11) **EP 0 295 682 B1**
(45) Date of publication and mention of the grant of the patent: **03.11.1993**
(21) Application number: 88109653.1
(22) Date of filing: 16.06.1988
(51) Int. Cl.: G11B 7/00, G11B 7/125

(54) **Wavelength selective optical recording and reproducing device**
Für Wellenlängen selektive optische Aufzeichnungs- und Wiedergabevorrichtung
Dispositif d'enregistrement et de reproduction optique, sélectif pour la longueur d'onde

(30) Priority: 19.06.1987 JP 154126/87
(43) Date of publication of application: 21.12.1988
(73) Proprietor: MITSUBISHI DENKI KABUSHIKI KAISHA, Tokyo 100 (JP)
(72) Inventor: Seya, Masatomo c/o MITSUBISHI DENKI K. K., Amagasaki-shi Hyogo (JP); Okada, Kazuo c/o MITSUBISHI DENKI K. K., Amagasaki-shi Hyogo (JP); Yoshimura, Motomu c/o MITSUBISHI DENKI K. K., Amagasaki-shi Hyogo (JP); Maeda, Mitsuo c/o MITSUBISHI DENKI K. K., Amagasaki-shi Hyogo (JP)
(74) Representative: Lehn, Werner, Dipl.-Ing.

(56) References cited:
- US-A- 4 101 976
- Applied Optics vol. 25, no. 18, 15 September 1986, New York, USA pages 3207 - 3216; F. M. Schellenberg et al.: "Technological aspects of frequency domain data storage using persistent spectral hole burning"

## Description

### BACKGROUND OF THE INVENTION

The present invention relates to a wavelength selective optical recording and reproducing device.

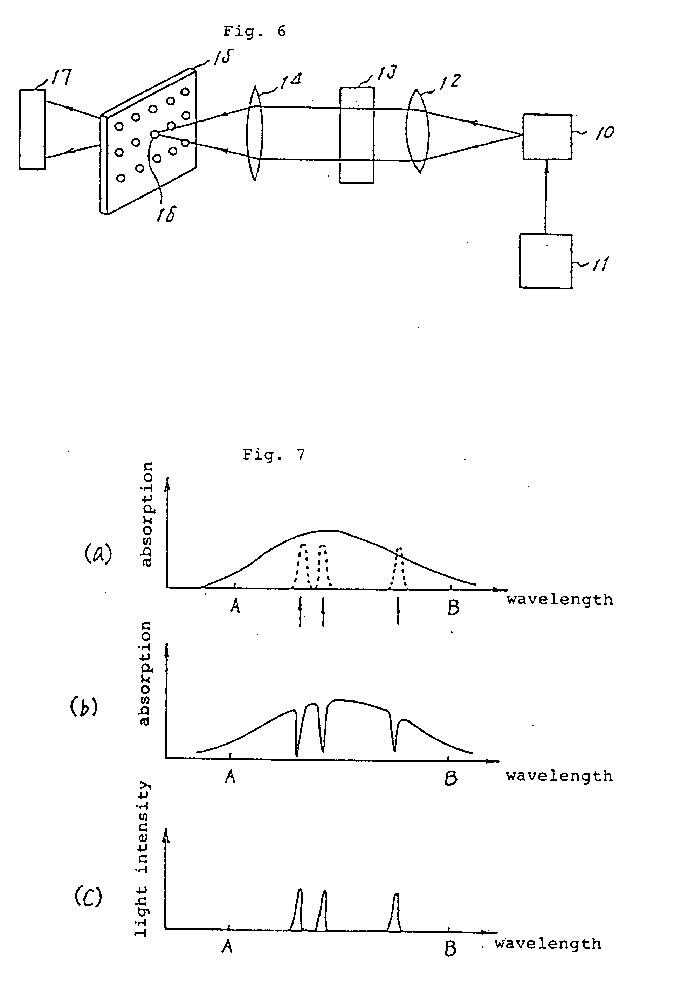

Fig. 6 shows a construction of a conventional such device which is disclosed in Japanese Patent Publication Gazette No. 51355/1983 and Fig. 7 illustrates wavelength spectrum of a recording medium having information recorded.

In Fig. 6, a reference numeral 10 depicts a wavelength variable light source such as semiconductor laser, 11 a controller for varying wavelength of the light source 10, 12 a collimating lens for making light from the light source 10 parallel beam, 13 a deflector, 14 an objective lens for condensing the parallel beam to a minute spot and directing it onto a recordable and reproducible medium 15,16 an arbitrary memory element of memory elements on the medium 15 which is shown by a circle in this figure, the arbitrary memory element being selected by the deflector 13, and 17 an optical sensor for sensing light passed through the memory element 16.

In operation, light from the light source 10 is converted by the collimating lens 12 into a parallel beam and condensed by the objective lens 14 to a light spot and directed onto the selected memory element 16 on the medium 15. The selection of the memory element can be performed arbitrarily by means of the deflector 13. The principle of the wavelength selective recording and reproducing at the selected memory element 16 will be described with reference to Fig. 7. A waveform (a) in Fig. 7 is an absorption spectrum of the medium prior to wavelength selective recording, which has a broad spectral characteristic. When the medium is irradiated with lights having intensity spectra such as shown by dotted lines, the absorption curve of the medium is fallen down locally correspondingly to peaks of the light spectra as shown by a waveform (b) in Fig. 7. Such absorption is called as a "spectral hole". When such spectral hole occurs, it is considered as that "1" is memorized on the medium at a corresponding wavelength. No absorption means that "0" is memorized. In order to produce a spectral hole at an arbitrary wavelength, i.e., to write a data "1" at such wavelength, it is enough to make the wavelength of the light source 10 by means of the wavelength controller 11 coincident with the wavelength of the spectral hole to be recorded and to increase the intensity of the light source 10 up to a value necessary to record. In order to read a signal recorded on the medium and having the wavelength selective record spectrum such as shown by the waveform (b) in Fig. 7, it is enough to scan a wavelength from an upper limit A to a lower limit B while the light intensity of the light source 10 being constant. Since the degree of absorption is lowered at the wavelength of the spectral hole, a spectrum of light intensity such as shown by a waveform (c) in Fig. 7 can be obtained by detecting a transmission light through the medium 15 by an optical detector 17. Although the waveform (c) in Fig. 7 shows the wavelength spectrum, it is possible to obtain at an output of the optical detector 17 a time series reproduced signal output by a wavelength scanning at a constant time speed.

Practically, it is possible to provide several thousands spectral holes in such broad spectral range as shown by the waveform (a) in Fig. 7. In order to realize the recording of such large number of spectral holes, it is necessary to control an absolute wavelength of the light source highly exactly. However, since the wavelength width of a spectral hole is typically in the order of several tens to several hundreds MHz in frequency, it is very difficult to select a wavelength of light correspondingly to frequency unit in such range, resulting in some error in reproduced data.

The article in Applied Optics, Vol. 25, No. 18, 15th Sept. 1986, pp 3207-3216, by F.M. Schellenberg et alia, entitled "Technological aspects of frequency domain data storage using persistent spectral hole burning", gives a review of prior art laser wavelength modulating techniques mentioned above. A diode laser is driven by a diode laser driver to sweep through 24 GHz with a frequency of above 1 Hz. The laser light is also modulated by a dither oscillater at 4kHz. An optical system condenses the laser light on a recording/reading medium. Light transmitted through said medium is detected by a large area photodetector which outputs a signal to a lock-in amplifer which also receives a signal from the dither oscillator as a reference. The output of the lock-in amplifier is fed to an oscilloscope.

### SUMMARY OF THE INVENTION

An object of the present invention is to provide a wavelength selective optical recording and reporducing device which is capable of reproducing a data highly reliably by controlling a light from a light source to an aimed wavelength at a time of reproduction of recorded data.

The object of the present invention is solved by wavelength selective optical recording and reproducing device as defined in claim 1.

In the wavelength selective optical recording and reproducing device according to the present invention, a hole position marker indicative of that a spectral hole to be recorded is already written is provided and the wavelength of a light source is controlled by detecting a phase with respect to the marker hole. That is, the light source is frequency-modulated and an output of a detector for detecting the marker hole is detected in phase to control the wavelength of the light source. Therefore, the wavelength of the light source is well controlled to an aimed wavelength.

### BRIEF DESCRIPTION OF THE DRAWING

Fig. 1 illustrates a construction of an embodiment of the present invention for explaning a principle of the present invention;
Fig. 2 shows waveforms detectable by an optical detector in Fig. 1;
Fig. 3 is an enlarged waveform of a portion in Fig. 2;
Fig. 4 shows an example of an output signal of a phase detector in Fig. 1;
Fig. 5 is a plan view of a recording and reproducing medium to be used in the embodiment of the present invention;
Fig. 6 is a construction of a conventional wavelength selective optical recording and reproducing device; and
Fig. 7 is a wavelength spectrum of the medium having informations recorded.

### DETAILED DESCRIPTION OF THE PREFERRED EMBODIMENT

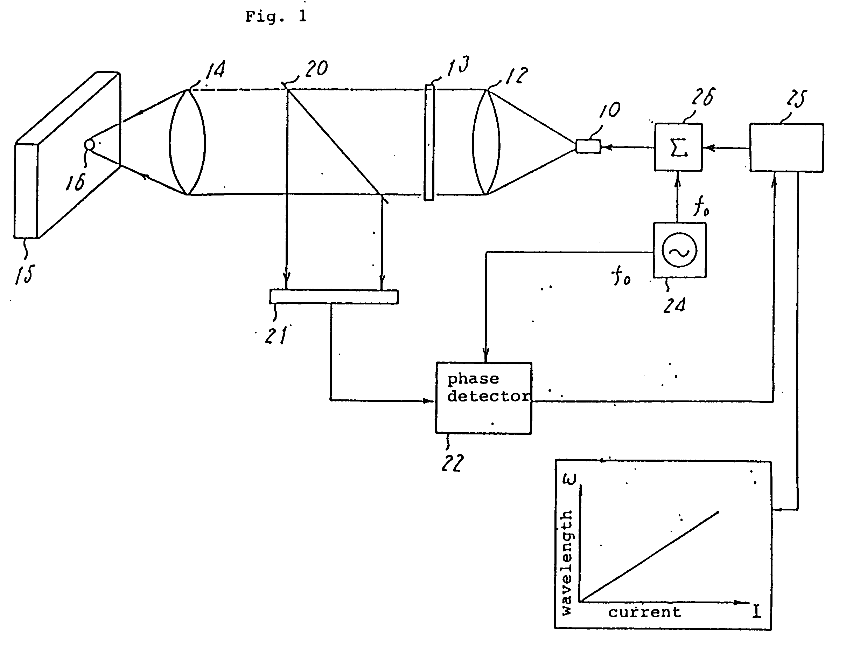

In Fig. 1 which shows an embodiment of the present invention, a reference numeral 10 depicts a wavelength variable light source such as a semiconductor laser, 12 a collimating lens for converting a light from the light source 10 into a parallel beam, 13 an optical deflector, 14 an objective lens for condensing the parallel beam to a small spot and irradiating a wavelength selective recording medium 15 with the spot, 16 one of memory elements on the medium 15 which is selected by the optical deflector 13, 20 a mirror for bending an optical axis of light reflected by the medium 15, 21 an optical detector for detecting a light reflected by the mirror 20, 22 a phase detector for detecting a phase of a signal detected by the optical detector 21, 24 a high frequency oscillator for frequency-modulating a frequency of the light source 10 with a constant frequency f and 25 a wavelength regulator for regulating the wavelength of the light source 10. In this embodiment, a semiconductor laser frequency of which can be scanned by a cuurent to be supplied thereto is used as the light source 10 and, therefore, the wavelength regulator 25 may be a voltage variable d.c. power source. Further, an adder 26 is included in this embodiment for adding an output of the high frequency oscillator 24 to an output of the wavelength regulator 25.

In operation, a light from the light source 10 is made a parallel beam by the collimating lens 12 and condensed by the objective lens 14 to a minute light spot. The latter is directed onto a selected memory element 16 on the medium 15.

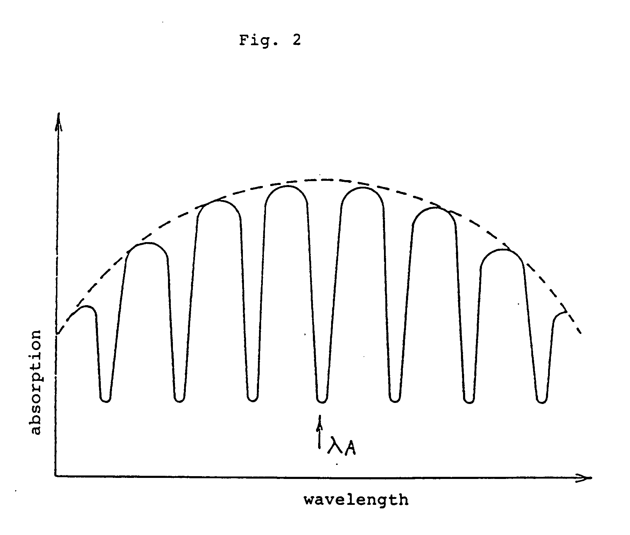

A reflection light from the medium 15 is bent by the mirror 20 and detected by the optical detector 21 an output of which is shown in Fig. 2.

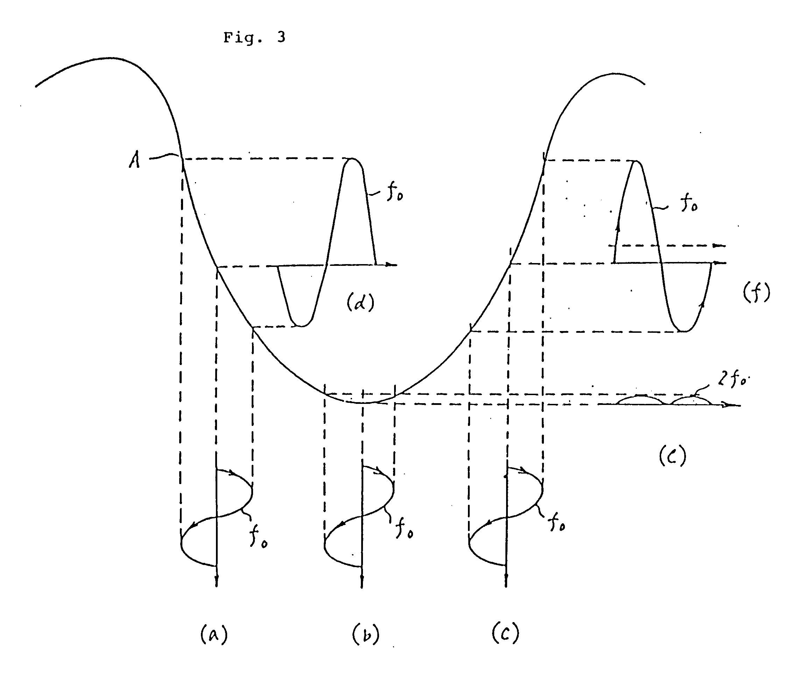

It is assumed at this time that the wavelength of the light source 10 is to be controlled exactly to a center frequency of a spectral hole having a wavelength λ_{A} in the spectrum shown in Fig. 2. A curve A in Fig. 3 shows the absorption spectrum of wavelength λ_{A} in Fig. 2. The light from the light source 10 has been modulated with the constant frequency fₒ by the high frequency oscillator 24. Therefore, an intensity of the reflected light from the medium 15 which is detected by the optical detector 21, is necessarily modulated to some extent and the modulation may depend upon a deviation of light source wavelength from λ_{A}.

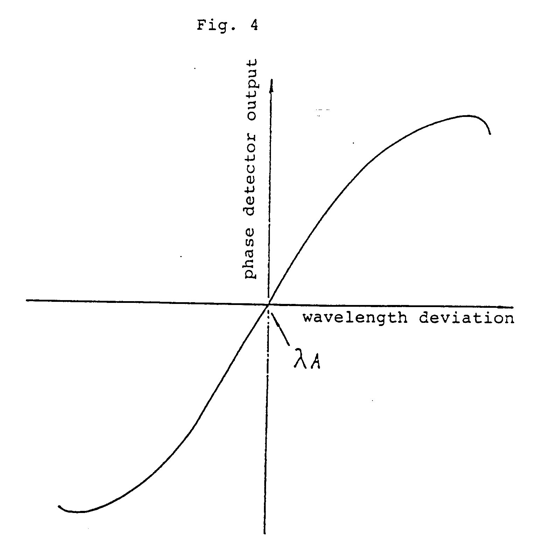

Waveforms (b) and (e) in Fig. 3 are a modulating waveform and a modulated waveform, respectively, when the light source wavelength is coincident on the aimed wavelength. As is clear from Fig. 3. The output waveform (e) has a frequency which is twice the modulating frequency. A waveform (c) in Fig. 3 is a case where the light source wavelength is longer than the aimed wavelength. The waveform (c) has a frequency which is the same as the frequency fₒ of the oscillator 24 and is in phase with the latter. When the light source wavelength is shorter than the aimed wavelength as shown by a waveform (a) in Fig. 3, the output waveform is modulated with the frequency fₒ , but the phase is inverted. Therefore, an output such as shown in Fig. 4 is obtained by adding the output of the optical detector 21 to the phase detector 22 and phase-detecting it with the output of the high frequency oscillator 24. By applying this output to the wavelength regulator 25 to perform a servo control, it is possible to make the wavelength of the light source 10 always coincident on the aimed hole wavelength λ_{A} . Thus, an exact recording and reproducing of informations becomes possible.

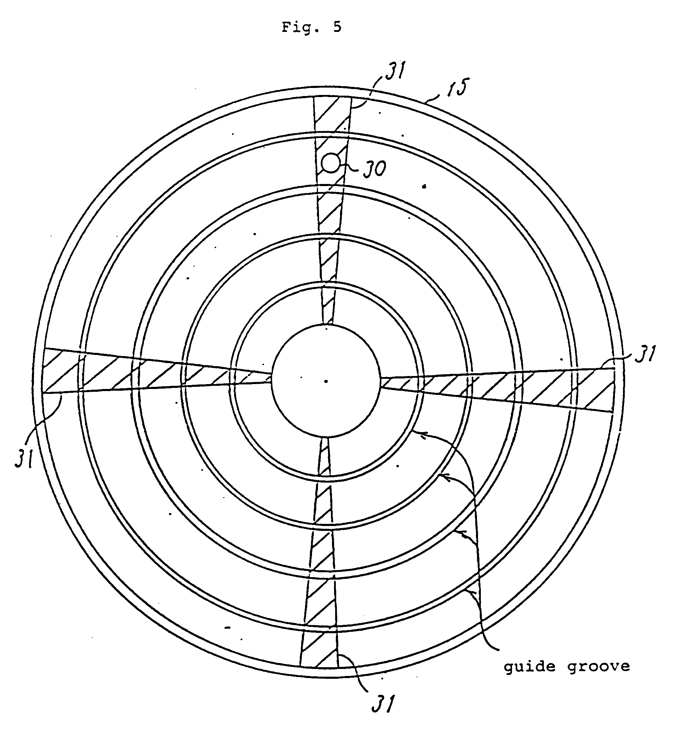

The wavelength regulation to be performed with respect to the hole according to the present invention may be done more effectively by using a recording and repoducing medium 15 such as shown in Fig. 5. In Fig. 5, the medium 15 has four coaxial guide grooves although the grooves may be substituted by a spiral guide groove. In Fig. 5, four marker regions 31 are provided on the medium 15 with an interval of 90°. A light spot on the medium moves along the medium with rotation thereof. When it is desired to record or reproduce information at any wavelength of marker region 31 selectively and one or more markers 30 are provided for each complete circular groove each of which includes holes in which data of all wavelengths are recorded, it is possible to detect a spectrum of a pit having all holes recorded for every complete revolution of the medium 15. Therefore, by performing the frequency control of the light source with using the spectrum as a servo signal, highly exact wavelength control becomes possible.

Due to such highly exact control of the light source wavelength, it is possible to scan the data in not the wavelength direction but the position direction. Therefore, the information can be recorded or reproduced continuously without loss of information even if a pit has a defect of such as dust or scratch. The scanning of data in the position direction makes the information reproducing speed higher than that obtainable by the scanning of the wavelength direction.

As mentioned hereinbefore, according to the present invention, a wavelength selective optical recording and reproducing device is provided which is operable at high speed wih high reliability, due to the phase detection on the basis of the spectral hole and the wavelength control of the wavelength of the light source according to a deviation of the detected wavelength thereby.

## Claims

1. A wavelength selective optical recording and reproducing device comprising:
a light source (10) having a variable wavelength;
a frequency generator (24) producing a constant frequency signal; said frequency generator (24) modulating said light source,
a recording and reproducing medium (15) for storing information, said information being selectively retrieved according to the wavelength of light;
an optical system (12, 13, 14) for condensing light from said light source (10) and illuminating said medium (15); and
sensor means (21) for detecting light from said medium (15), said sensor means (21) producing a data signal when said light is at a predetermined wavelength of a spectral holes and
adder means (26) connected to said light source (10) for adding said constant frequency signal to an output signal of controller means (25), characterized by
phase detector means (22) receiving said constant frequency signal and said data signal and producing a phase difference signal in response thereto; and
said controller means (25) receiving said phase difference signal and supplying said output signal to said adder means (26) to control the wavelength of said light source (10) to said predetremined wavelength.

2. The device according to claim 1, characterized by means for recording data having the predetermined wavelength in a marker (30) of said medium (15) as a reference and said sensor means (21) being adapted to detect a reflected light from or transmitted through said marker.

3. The device according to claim 1 or 2, characterized by that said medium (15) contains coaxial guide grooves.

4. The device according to claim 3, characterized by that said medium (15) contains a plurality of markers with data being recorded once in each marker so that the data may be detected a plurality of times per revolution of said medium (15).

5. The wavelength selective optical recording and reproducing device as claimed in any claims 2 to 4, wherein said marker (30) are provided for all of wavelengths to be recorded in said medium (15).

6. The device according to claim 1 or 2, characterized by that said medium (15) contains spiral guide grooves.

## Patentansprüche

1. Wellenlängenselektive optische Aufzeichnungs- und Wiedergabevorrichtung, mit
einer Lichtquelle (10) mit einer variablen Wellenlänge;
einem Frequenzgenerator (24), welcher ein Signal mit konstanter Frequenz erzeugt; wobei der Frequenzgenerator (24) die Lichtquelle moduliert; einem Aufzeichnungs- und Wiedergabemedium (15) zum Speichern von Information, wobei die Information selektiv gemäß der Lichtwellenlänge wiedergewonnen wird;
einem optischen System (12, 13, 14) zum Bündeln von Licht von der Lichtquelle (10) und Beleuchten des Mediums (15); und
Sensoreinrichtungen (21) zum Erfassen von Licht von dem Medium (15), wobei die Sensoreinrichtungen (21) ein Datensignal erzeugen, wenn das Licht bei einer vorbestimmten Wellenlänge eines spektralen Loches ist, und
Addiereinrichtungen (26), welche mit der Lichtquelle (10) verbunden sind, um das Signal konstanter Frequenz mit einem Ausgangssignal einer Steuerungseinrichtung (25) zu addieren,
**gekennzeichnet** durch
Phasenerfassungseinrichtungen (22), welche das Signal konstanter Frequenz und das Datensignal empfangen und daraufhin ein Phasendifferenzsignal erzeugen; und
wobei die Steuerungseinrichtung (25) das Phasendifferenzsignal empfängt, und das Ausgangssignal an die Addiereinrichtungen (26) liefert, um die Wellenlänge der Lichtquelle (10) zu der vorbestimmten Wellenlänge zu steuern.

2. Vorrichtung nach Anspruch 1, gekennzeichnet durch Einrichtungen zum Aufzeichnen von Daten mit der vorbestimmten Wellenlänge in einer Markierung (30) des Mediums (15) als eine Referenz, wobei die optischen Sensoreinrichtungen (21) angepaßt sind, ein reflektiertes Licht von oder durch die Markierung hindurch zu erfassen.

3. Vorrichtung nach Anspruch 1 oder 2, dadurch gekennzeichnet, daß das Medium (15) koaxiale Führungsrillen enthält.

4. Vorrichtung nach Anspruch 3, dadurch gekennzeichnet, daß das Medium (15) eine Vielzahl von Markierungen enthält, wobei Daten einmal in jeder Markierung aufgezeichnet werden, so daß die Daten mehrfach pro Umdrehung des Mediums (15) erfaßt werden können.

5. Wellenlängenselektive Aufzeichnungs- und Wiedergabevorrichtung nach einem der Ansprüche 2 bis 4, dadurch gekennzeichnet, daß die Markierungen (30) für alle in dem Medium (15) aufzuzeichnenden Wellenlängen vorgesehen sind.

6. Vorrichtung nach Anspruch 1 oder 2, dadurch gekennzeichnet, daß das Medium (15) spiralförmige Führungsrillen enthält.

## Revendications

1. Dispositif d'enregistrement et de reproduction optique sélectif en longueur d'onde comprenant :
- une source lumineuse (10) ayant une longueur d'onde variable;
- un générateur de fréquence (24) produisant un signal de fréquence constante, ledit générateur de fréquence (24) modulant ladite source lumineuse;
- un support d'enregistrement et de reproduction (15) pour mémoriser des informations, lesdites informations étant extraites sélectivement selon la longueur d'onde de la lumière;
- un système optique (12,13,14) pour concentrer la lumière provenant de ladite source lumineuse (10) et pour éclairer ledit support (15);
- des moyens de détection (21) pour détecter la lumière provenant dudit support (15), lesdits moyens de détection (21) produisant un signal de données lorsque ladite lumière est à une longueur d'onde prédéterminée d'un trou spectral; et
- des moyens d'addition (26) connectés à ladite source lumineuse (10) pour ajouter ledit signal de fréquence constante à un signal de sortie de moyens de contrôle (25), caractérisé par :
- des moyens de détection de phase (22) recevant ledit signal de fréquence constante et ledit signal de données, produisant un signal de différence de phase en réponse à ceux-ci; et
- lesdits moyens de contrôle (25) recevant ledit signal de différence de phase et fournissant ledit signal de sortie auxdits moyens d'addition (26), pour contrôler la longueur d'onde de ladite source lumineuse (10) sur ladite longueur d'onde prédéterminée.

2. Dispositif selon la revendication 1, caractérisé par des moyens pour enregistrer des données ayant la longueur d'onde prédéterminée dans un repère (30) dudit support (15) en tant que référence et lesdits moyens de détection (21) étant adaptés à la détection d'une lumière réfléchie depuis ou transmise à travers ledit repère.

3. Dispositif selon la revendication 1 ou 2, caractérisé en ce que ledit support (15) contient des rainures de guidage coaxiales.

4. Dispositif selon la revendication 3, caractérisé en ce que ledit support (15) contient une pluralité de repères contenant des données enregistrées, une pour chaque repère, de telle sorte que les données peuvent être détectées une pluralité de fois par révolution dudit support (15).

5. Dispositif d'enregistrement et de reproduction optique sélectif pour la longueur d'onde selon l'une quelconque des revendications 2 à 4, dans lequel lesdits repères (30) sont prévus pour que toutes les longueurs d'ondes soient enregistrées dans ledit support (15).

6. Dispositif selon la revendication 1 ou 2, caractérisé en ce que ledit support (15) contient des rainures de guidage en spirale.
